# EUROPEAN PATENT SPECIFICATION

(11) **EP 1 900 158 B1**
(45) Date of publication and mention of the grant of the patent: **11.10.2017**
(21) Application number: 06764537.4
(22) Date of filing: 29.06.2006
(51) Int. Cl.: H04L 12/42, G05B 19/418

(54) **REDUNDANT AUTOMATION DATA COMMUNICATIONS NETWORK**
REDUNDANTES AUTOMATISIERUNGS-DATENNETZ
RESEAU DE COMMUNICATIONS DE DONNEES D'AUTOMATION REDONDANT

(30) Priority: 29.06.2005 FI 20055363
(43) Date of publication of application: 19.03.2008
(73) Proprietor: ABB Schweiz AG, 5400 Baden (CH)
(72) Inventor: HAKALA-RANTA, Antti, FI-65230 Vaasa (FI); TALVITIE, Tero, FI-65350 Vaasa (FI); LAPPALAINEN, Kari, FI-40520 Jyväskylä (FI); BJÖRKMAN, Heikki, FI-65320 Vaasa (FI)
(74) Representative: Kolster Oy Ab
(86) International application number: PCT/FI2006/050298
(87) International publication number: WO 2007/000499

(56) References cited:
- MARKUS SCHAUB, HARTMUT KELL: "Redundancy Process with Hirschmann Switches" PRODUCT ANALYSIS, HIPER RING VS. RSTP, [Online] 2003, pages I-IV, 1-32, V, XP002407110 Retrieved from the Internet: URL:http://www.hirschmann-ac.de/English/In dustrial_Ethernet_Produkte/Downloadcenter/ Technology_and_White_Paper/Ring_Redundancy /101110_produktstudie__englisch/index.phtm l?force=true> [retrieved on 2006-11-13]
- MOXA NETWORKING: "Redundancy in Automation" WHITEPAPER, [Online] 2003, pages 1-16, XP002407109 Retrieved from the Internet: URL:http://www.moxa.com/Zones/Industrial_E thernet/Redundancy_in_Automation.pdf> [retrieved on 2006-11-13]

## Description

### Field of technology

The invention relates to an automation data communications network, particularly to making such a network redundant.

### Background of the invention

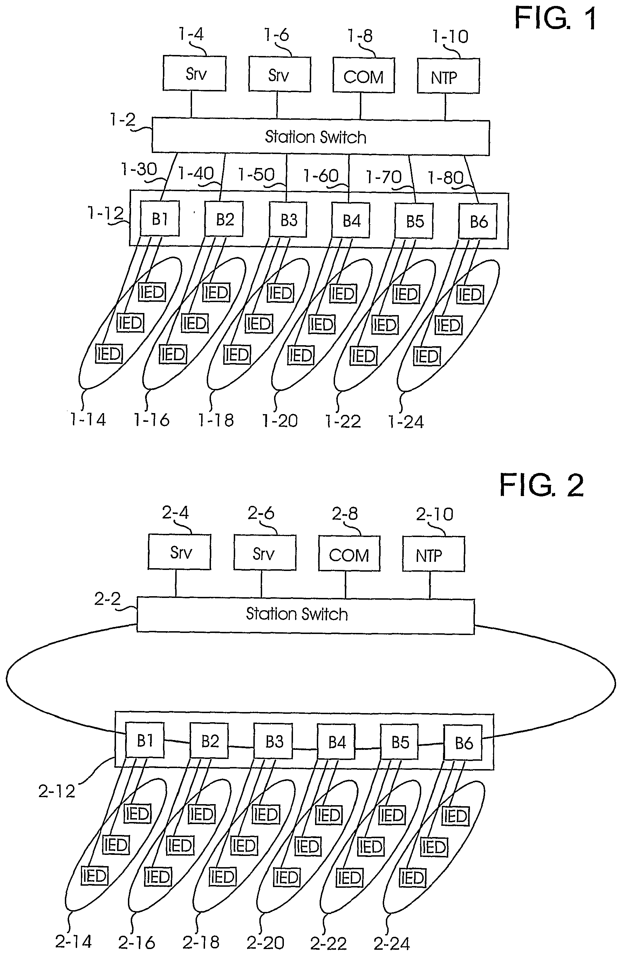

Figure 1 illustrates a simple conventional automation data communications network consisting of a star connection. The connection includes one station switch 1-2 and a number of bay switches 1-12. Each bay switch B1 ... B6 allows the connection of one or more IEDs (Intelligent Electronic Devices) 1-14 ... 1-24, such as protection relays. Furthermore, servers 1-4, 1-6, a COM gateway 1-8 and a time synchronization device (NTP, Network Time Protocol) 1-10 can be connected to the station switch. In Figure 1 the bay switches are connected into a star arrangement.

A simple redundant network can be created by changing the star arrangement into a loop in accordance with Figure 2. In this arrangement the servers 2-4, 2-6, the COM device 2-8 and the NTP device 2-10 are connected to the station switch 2-2. A number of bay switches 2-12 are also connected to the station switch in a loop arrangement. Similar to Figure 1, the loop model allows one or more IEDs 2-14 ... 2-24 to be connected to each bay switch. Figure 2 shows that the arrangement provides bay level redundancy but the connection between the IEDs and the bay switches remains non-redundant. This means that failure of a single bay switch breaks the connection to all devices located subordinate to that switch.

If redundancy is desired at the IED level, each IED must be connected to two switches. This is accomplished by equipping each IED with two Ethernet interfaces and connecting it to two different switches. Therefore, each device must contain two Ethernet ports for connecting the device to an Ethernet LAN, and two separate switches are required for connecting the device. The number of bay switches required to connect the same number of IEDs to the network will be doubled at worst. However, if a single bay switch fails, communication to all IEDs will be operational through the other switch.

Document "Redundancy Process with Hirschmann Switches" Product analysis, Hiper ring vs. RSTP, XP 002407110 discloses a product test that is designed to analyze whether Ethernet switch systems are suitable for industry environments systems. Redundancy process include RSTP (Rapid Spanning Tree Protocol), Hirschmann process, dual homing, Hiper ring coupling and HiRRP (Hirschmann Router Redundancy Protocol).

Document Moxa Networking: " Redundancy in Automation", Whitepaper, XP 002407109 discloses tests for redundancy in automation. It include power redundancy, media redundancy, network node redundancy, network redundancy and complete system redundancy.

However, the problem with the prior art solutions described above is that switches are always used to connect devices to the Ethernet network. Ethernet switches intended for industrial use are substantially expensive, and a single switch only allows the connection of a few devices. For example, two 8-port Ethernet switches can accommodate 14 devices in a star arrangement but only 6 devices in a redundant network. Thus the connection of 30 IEDs, for example, will require six 8-port switches in a star arrangement and as many as twelve switches in a redundant network. This causes substantial extra costs in a situation where redundancy is an absolute requirement.

### Brief description of the invention

The objective of the invention is to develop a method and an apparatus implementing the method in order to solve the problems referred to above. The objective of the invention will be accomplished by a network, method, device and system characterized by the independent claims. The dependent claims describe preferred embodiments of the invention.

The invention is based on arranging at least two loops between the IEDs and/or the IED control and data acquisition device, and providing an internal switch feature within the IED. This allows the IED to be connected to the Ethernet network without separate Ethernet switches. Furthermore, the Spanning Tree Protocol (STP) or the Rapid Spanning Tree Protocol (RSTP) can be provided in the device.

The advantage of a method and system according to the invention is that an inexpensive redundant automation data communications network can be implemented completely without separate Ethernet switches.

### Brief description of the drawings

In the following the invention will be described in more detail in connection with preferred embodiments by referring to the enclosed drawings, where
Figure 1 illustrates a conventional automation data communications network;
Figure 2 illustrates a redundant conventional automation data communications network;
Figure 3 illustrates an integrated 2-port switch function as part of an IED according to the invention and one of its preferred embodiments; and
Figure 4 illustrates an arrangement according to the invention and one of its preferred embodiments.

### Detailed description of the invention

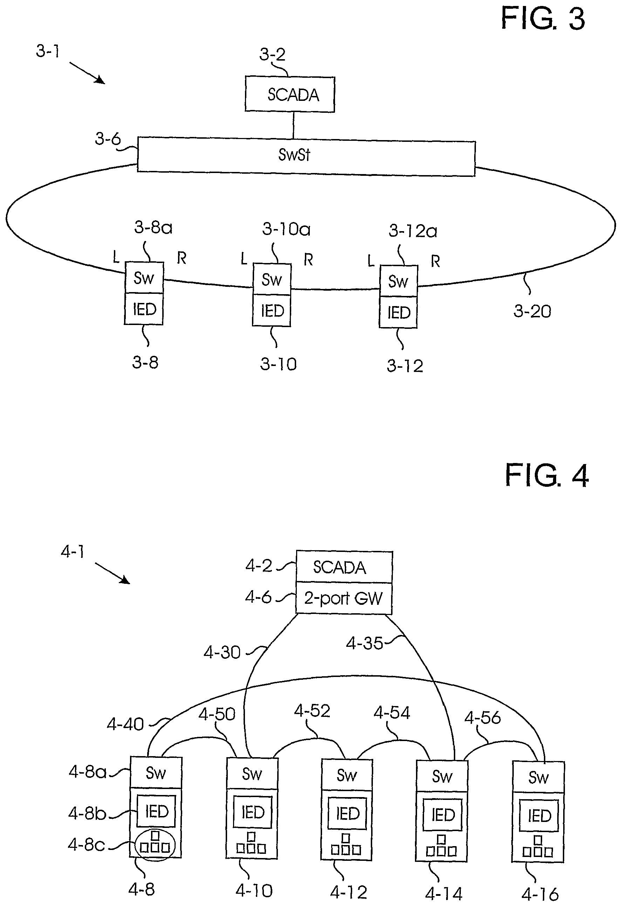

Figure 4 illustrates an arrangement according to the invention and one of its preferred embodiments that creates a redundant automation data communications network. In this context redundancy can refer to the fact that information from a source such as an electric power network can be communicated from an IED through at least two alternate routes to a control and data acquisition device, such as a remote or local control room or a SCADA (Supervisory Control and Data Acquisition) device, which can be a computer or a relay for example. Redundancy can also refer to the fact that information can be communicated between IEDs through at least two alternate routes.

According to the invention and one of its preferred embodiments, the switch function for an IED can be integrated into the IED. This allows the creation of an alternative for a network comprising bay switches, and the IEDs can be daisy-chained as a simple loop connected to the station switch. This is illustrated in Figure 3. In the figure the control and data acquisition device 3-2 is connected to an element 3-6, such as a station switch that can be a 3-port switch for example. Three IEDs 3-8, 3-10, 3-12 are connected to the station switch. Each IED block can have an integrated switch Sw with at least 2 ports designated L (Left) and R (Right). This allows communications to be routed from the left port of the first switch to the first IED, and from the right port to the left port of the switch within the second IED for example. As illustrated in Figure 3, according to the invention and its preferred embodiments, said 2-port switch 3-8a, 3-10a, 3-12a can be integrated into the IED 3-8 ... 3-12, and one or more IEDs 3-8 ... 3-12 that can include an integrated 2-port switch and said at least 2-port element 3-6 can form a connection 3-20 arranged as a loop. The element 3-6 referred to in the above can be a 3-port switch 3-6 or a control and data acquisition device 3-2, 4-2. The procedure referred to in the above creates a redundant connection from the station switch to the IEDs, and any interruption between two IEDs can be compensated for as necessary. The failure of a single IED-specific switch or the failure of a single IED will only interrupt the connection to the failed device.

According to the invention and another of its preferred embodiments, an element with at least two ports, such as an Ethernet card 4-6, or two elements with at least one port, such as Ethernet cards, can be added to form a functional connection with the control and data acquisition device such as the SCADA device 4-2. This allows the elimination of the station switch 3-6 (Figure 3), making the switch function a part of the SCADA system's Ethernet interface. Instead of an Ethernet interface, the element 4-6 can be a 2-port switch or a 2-port gateway element for example.

According to the invention and its preferred embodiments, one or more loops can be arranged between the IEDs 4-8 ... 4-16, and/or one or more loops can be arranged between the IEDs 4-8 ... 4-16 and the control and data acquisition device 3-2, 4-2. When creating a loop that includes a control and data acquisition device, at least two IEDs can be connected to the control and data acquisition device. Furthermore, devices such as IEDs can be connected to the control and data acquisition device so that they are not included in the loop.

According to Figure 4, the SCADA can be connected 4-30, 4-35 redundantly to two 3-port switches integrated into IED blocks 4-10, 4-14. In this case the arrangement creates two loops between the IED blocks 4-8 ... 4-16 and the SCADA device, and no separate switches are required in the network. For example, the network's first loop 4-40, 4-50 ... 4-56 is created between all of the IEDs in the loop, the second loop 4-30, 4-52, 4-54, 4-35 is created between the SCADA device 4-2 and two or more IEDs 4-10,4-12, 4-14, and the third loop 4-30, 4-50, 4-40, 4-56, 4-35 is created between the SCADA device 4-2 and two or more IEDs 4-10, 4-8, 4-16, 4-14.

Connections according to the above allow communication between IEDs through the station switch in case a loop internal to the instrumentation is broken. If the station switch is replaced by two separate Ethernet interfaces in the control and data acquisition device for example, the switch function enables communication between IEDs. This switch function between two Ethernet interfaces can be implemented in software for example.

Thus the SCADA device can be directly connected to two or more IEDs. This arrangement allows each IED in the redundant network to be connected to at least one other IED, and one or more IEDs to be additionally connected to the control and data acquisition device. Alternatively, the SCADA device can be connected to two IED blocks using two mutually independent Ethernet interfaces with no switch function and without creating a loop, while still providing a redundant connection from the IED blocks to the SCADA device.

The control and data acquisition device 4-2 can be connected to two IED blocks, meaning that the control and data acquisition device can be connected to the loop of IEDs using two connections so that the IED blocks connected to the control and data acquisition device are adjacent IED blocks, or at least one IED block that is not connected to the control and data acquisition device remains between the IED blocks.

An IED can also be referred to as an IED block. As shown in Figure 4, each IED block 4-8 may comprise a switch 4-8a, an IED 4-8b and a user interface 4-8c.

The above only describes one potential connection arrangement, but it should be understood that connection arrangements could be implemented in several ways, fulfilling the condition that at least one IED can be equipped with a redundant connection to the SCADA device. Thus redundancy can be taken to the IED level, and a failure of a single IED only interrupts the connection to that particular device. Within the connection arrangements, connections can be permanent, meaning that they are active whenever there is no failure.

Switching reliability can also be increased by providing more connections to the station switch, for example a third or fourth connection.

According to the invention and its preferred embodiments, the SCADA element is not mandatory in the connection arrangements but can be replaced by an element such as an IED. Furthermore, a connection arrangement can be created in which the SCADA element is connected to only one IED and/or only the IEDs are in a loop and/or at least one loop is arranged between the IEDs and the control and data acquisition device.

The invention and its preferred embodiments provide a loop of IEDs and, optionally, an additional redundant SCADA connection.

According to yet another preferred embodiment of the invention, the devices connected to the redundant network can be equipped with a protocol that facilitates the control of communication in a looped network. For example, the protocol for the IEDs and the SCADA element can be chosen to support recovery from failures as quickly as possible and allow efficient reconfiguration of the network topology. The protocol can also be arranged to prevent the creation of functionally non-terminated loops. Examples of potentially supported protocols include the Spanning Tree Protocol (STP) and the Rapid Spanning Tree Protocol (RSTP).

One of the purposes of the invention and its preferred embodiments is the implementation of a redundant communications network without separate Ethernet switches. According to the invention and its preferred embodiments, an Ethernet switch and a redundant connection can be integrated as a part of the IED functionality, and devices can be directly daisy-chained with each other. This means that separate switches are not necessarily required in the network solutions for an electrical substation, and the number of switches can be substantially reduced. A switch is only required for devices with no integrated switch. To allow full-scale utilization of the invention and its preferred embodiments, one or more devices connected to the network should have a switch with at least 2 or 3 ports, integrated or non-integrated. Furthermore, as specified in the above, the devices must support a protocol referred to in the above, preferably the STP or RSTP protocol.

According to a preferred embodiment, a redundant automation data communications network can be implemented completely without separate Ethernet switches if the IEDs have an integrated switch feature and the devices implement the Spanning Tree Protocol (STP) or the Rapid Spanning Tree Protocol (RSTP). Support for said protocols allows the connection of commercial switches to the same automation network for example. It is also possible to use the Enhanced Rapid Spanning Tree Protocol, a further development of RSTP that can recover from a reconfiguration of network topology within a time as short as 5 ms. This will increase the security of a substation network, and for example, as connection interruptions become shorter.

An advantage of the invention and its preferred embodiments is that the automation data communications network will remain operational even if two IEDs fail or if a single IED and the station switch connection fail.

Another advantage of the invention and its preferred embodiments is that substantial cost savings are generated through the elimination of any separate industrial-duty Ethernet switches from the network.

It is obvious to a person skilled in the art that the progress of technology will allow the fundamental idea of the invention to be implemented in many different ways. Thus the invention and its embodiments are not limited to the examples described above but may vary within the scope of the claims.

## Claims

1. An automation data communications network (3-1, 4-1), comprising
- a control and data acquisition device (3-2, 4-2), said device supporting a protocol for controlling communications within said network (3-1, 4-1);
- one or more IED-devices (4-8 ... 4-16), Intelligent Electronic Devices, said IED-devices supporting a protocol for controlling communications within said network (3-1, 4-1) and comprising a switch (4-8a) with at least two ports arranged in a functional connection with the IED-devices, **characterized in that**
- an element (4-6) with at least two ports is arranged in a functional connection with the control and data acquisition device (3-2, 4-2); and that
- a first loop (4-40, 4-50 ... 4-56) is arranged between all of the IED-devices (4-8 ... 4-16), a second loop (4-30, 4-52, 4-54, 4-35) is arranged between two or more IED-devices (4-10, 4-12, 4-14) and the control and data acquisition device (3-2, 4-2), and a third loop different to the second loop (4-30, 4-50, 4-40, 4-56, 4-35) is arranged between two or more IED-devices (4-10, 4-8, 4-16, 4-14) and the control and data acquisition device (3-2, 4-2), and that
- the IED-devices are arranged to communicate with the other IED-devices through the first loop and the IED-devices and the control and data acquisition device are arranged to communicate with one another through the second and third loop.

2. A network (3-1, 4-1) according to claim 1, **characterized in that** said element (4-6) with at least two ports is integrated into the control and data acquisition device.

3. A network (3-1, 4-1) according to claim 1 or 2, **characterized in that** said element (4-6) with at least two ports is replaced by an Ethernet card with at least two ports.

4. A network (3-1, 4-1) according to any of the preceding claims, **characterized in that** said switch (4-8a) with at least two ports is integrated into an IED.

5. A network (3-1, 4-1) according to any of the preceding claims, **characterized in that** said switch (4-8a) with at least two ports is replaced by an Ethernet card with at least two ports.

6. A network (3-1, 4-1) according to any of the preceding claims, **characterized in that** the protocol is arranged to prevent the creation of functionally non-terminated loops.

7. A network (3-1, 4-1) according to claim 6, **characterized in that** the protocol is the Spanning Tree Protocol or the Rapid Spanning Tree Protocol.

8. A network (3-1, 4-1) according to any of the preceding claims, **characterized in that** it further comprises one or more IED-devices (4-8 ... 4-16) adapted directly to the loop-shaped network (3-1, 4-1) and/or the control and data acquisition device (3-2, 4-2) using a switch.

9. A method for making an automation data communications network (3-1, 4-1) comprising one or more IED-devices, Intelligent Electronic Devices each comprising a switch with at least two ports functionally connected to the IED-device and a control and data acquisition device redundant, said method utilizing a protocol for controlling communications within said network (3-1, 4-1), **characterized in that** a first loop (4-40, 4-50 ... 4-56) is created between all of the IED-devices (4-8 ... 4-16) through which the IED-devices comunicate with the other IED-devices,
an element with at least two ports being arranged in a functional connection with the control and data acquisition device a second loop (4-30, 4-52, 4-54, 4-35) is created between two or more IED-devices (4-10, 4-12, 4-14) and the control and data acquisition device (3-2, 4-2), and a third loop different to the second loop (4-30, 4-50, 4-40, 4-56, 4-35) is created between two or more IED-devices (4-10, 4-8, 4-16, 4-14) and the control and data acquisition device (3-2, 4-2), wherein communications between the control and data acquisition device and the IED devices are performed through the second and third loop.

10. An IED-device, Intelligent Electronic device (4-8 ... 4-16) for an automation data communications network (3-1, 4-1), said device (4-8 ... 4-16) being arranged to support a protocol for controlling communications within said network (3-1, 4-1) and comprising a switch (4-8a) with at least two ports being arranged in a functional connection with said device (4-8 ... 4-16), **characterized in that** the device (4-8 ... 4-16) is arranged to communicate with other IED-devices (4-8 ... 4-16) through a first loop arranged between all IED-devices in the automation data communications network (4-50 ... 4-56) and **in that** the device (4-8 ... 4-16) is arranged to communicate with a control and data acquisition device (3-2, 4-2) through a second loop arranged between two or more IED-devices and the control and data acquisition device (4-30, 4-52, 4-54, 4-35) and a third loop arranged between two or more IED-devices and the control and data acquisition device different to the second loop (4-30, 4-50, 4-40, 4-56, 4-35).

11. A system comprising a control and data acquisition device (4-2) for an automation data communications network (3-1, 4-1), said device (4-2) being arranged to support a protocol for controlling communications within said network (3-1, 4-1) and an element (4-6) with at least two ports being arranged in a functional connection with said device (4-2), **characterized in that** the device (4-2) is arranged to communicate with all IED-devices (4-8 ... 4-16), Intelligent Electronic Devices being interconnected forming a first loop (4-40, 4-50 ... 4-56) in the automation data communications network (3-1, 4-1) through a second loop (4-50 ... 4-56) arranged between two or more IED-devices and the device and a third loop different to the second loop arranged between two or more IED-devices and the device (4-30, 4-52, 4-54,4-35).

## Patentansprüche

1. Automatisierungsdatenkommunikationsnetzwerk (3-1, 4-1), umfassend
- ein Steuerungs- und Datenerfassungsgerät (3-2, 4-2), wobei das Gerät ein Protokoll zum Steuern von Kommunikation innerhalb des Netzwerks (3-1, 4-1) unterstützt;
- ein oder mehr IED-Geräte (4-8 ... 4-16), intelligente Elektronikgeräte, wobei die IED-Geräte ein Protokoll zum Steuern von Kommunikation innerhalb des Netzwerks (3-1, 4-1) unterstützen und einen Schalter (4-8a) mit mindestens zwei Anschlüssen umfassen, die in funktionaler Verbindung mit den IED-Geräten eingerichtet sind,
**dadurch gekennzeichnet, dass**
- ein Element (4-6) mit mindestens zwei Anschlüssen in funktionaler Verbindung mit dem Steuerungs- und Datenerfassungsgerät (3-2, 4-2) eingerichtet ist; und dass
- eine erste Schleife (4-40, 4-50 ... 4-56) zwischen allen der IED-Geräte (4-8 ... 4-16) eingerichtet ist, eine zweiten Schleife (4-30, 4-52, 4-54, 4-35) zwischen zwei oder mehr IED-Geräten (4-10, 4-12, 4-14) und dem Steuerungs- und Datenerfassungsgerät (3-2, 4-2) eingerichtet ist, und eine dritte Schleife, die sich von der zweiten Schleife (4-30, 4-50, 4-40, 4-56, 4-35) unterscheidet, zwischen zwei oder mehr IED-Geräten (4-10, 4-8, 4-16, 4-14) und dem Steuerungs- und Datenerfassungsgerät (3-2, 4-2) eingerichtet ist, und dass
- die IED-Geräte dafür eingerichtet sind, mit den anderen IED-Geräten durch die erste Schleife hindurch zu kommunizieren und die IED-Geräte und das Steuerungs- und Datenerfassungsgerät dafür eingerichtet sind, miteinander durch die zweite und dritte Schleife zu kommunizieren.

2. Netzwerk (3-1, 4-1) nach Anspruch 1, **dadurch gekennzeichnet, dass** das Element (4-6) mit mindestens zwei Anschlüssen in das Steuerungs- und Datenerfassungsgerät integriert ist.

3. Netzwerk (3-1, 4-1) nach Anspruch 1 oder 2, **dadurch gekennzeichnet, dass** das Element (4-6) mit mindestens zwei Anschlüssen durch eine Ethernet-Karte mit mindestens zwei Anschlüssen ersetzt ist.

4. Netzwerk (3-1, 4-1) nach einem der vorstehenden Ansprüche, **dadurch gekennzeichnet, dass** der Schalter (4-8a) mit mindestens zwei Anschlüssen in ein IED integriert ist.

5. Netzwerk (3-1, 4-1) nach einem der vorstehenden Ansprüche, **dadurch gekennzeichnet, dass** der Schalter (4-8a) mit mindestens zwei Anschlüssen durch eine Ethernet-Karte mit mindestens zwei Anschlüssen ersetzt ist.

6. Netzwerk (3-1, 4-1) nach einem der vorstehenden Ansprüche, **dadurch gekennzeichnet, dass** das Protokoll dafür eingerichtet ist, die Erschaffung von funktional nicht beendeten Schleifen zu verhindern.

7. Netzwerk (3-1, 4-1) nach Anspruch 6, **dadurch gekennzeichnet, dass** das Protokoll das Spanning-Tree-Protokoll oder das Rapid-Spanning-Tree-Protokoll ist.

8. Netzwerk (3-1, 4-1) nach einem der vorstehenden Ansprüche, **dadurch gekennzeichnet, dass** es ferner eines oder mehrere IED-Geräte (4-8 ... 4-16) umfasst, die direkt an das schleifenförmige Netzwerk (3-1, 4-1) und/oder das Steuerungs- und Datenerfassungsgerät (3-2, 4-2) unter Verwendung eines Schalters adaptiert sind.

9. Verfahren zum redundant Machen eines Automatisierungsdatenkommunikationsnetzwerks (3-1, 4-1), umfassend ein oder mehrere IED-Geräte, intelligente Elektronikgeräte, von denen jedes einen Schalter mit mindestens zwei Anschlüssen umfasst, die funktional mit den IED-Geräten verbunden sind, und ein Steuerungs- und Datenerfassungsgerät, das Verfahren nutzend ein Protokoll zum Steuern von Kommunikation innerhalb des Netzwerks (3-1, 4-1), **dadurch gekennzeichnet, dass** eine erste Schleife (4-40, 4-50 ... 4-56) zwischen allen der IED-Geräte (4-8 ... 4-16) erschaffen wird, durch die die IED-Geräte mit den anderen IED-Geräten kommunizieren, wobei ein Element mit mindestens zwei Anschlüssen in einer funktionalen Verbindung mit dem Steuerungs- und Datenerfassungsgerät eingerichtet ist,
eine zweite Schleife (4-30, 4-52, 4-54, 4-35) zwischen zwei oder mehr IED-Geräten (4-10, 4-12, 4-14) und dem Steuerungs- und Datenerfassungsgerät (3-2, 4-2) erschaffen wird, und eine dritte Schleife, die sich von der zweiten Schleife (4-30, 4-50, 4-40, 4-56, 4-35) unterscheidet, zwischen zwei oder mehr IED-Geräten (4-10, 4-8, 4-16, 4-14) und dem Steuerungs- und Datenerfassungsgerät (3-2, 4-2) erschaffen wird, wobei Kommunikation zwischen dem Steuerungs- und Datenerfassungsgerät und den IED-Geräten durch die zweite und dritte Schleife hindurch durchgeführt wird.

10. IED-Gerät, intelligentes Elektronikgerät, (4-8 ... 4-16) für ein Automatisierungsdatenkommunikationsnetzwerk (3-1, 4-1), wobei das Gerät (4-8 ... 4-16) dafür eingerichtet ist, ein Protokoll zum Steuern von Kommunikation innerhalb des Netzwerks (3-1, 4-1) zu unterstützen, und einen Schalter (4-8a) mit mindestens zwei Anschlüssen umfasst, die in einer funktionalen Verbindung mit dem Gerät (4-8 ... 4-16) eingerichtet sind, **dadurch gekennzeichnet, dass** das Gerät (4-8 ... 4-16) dafür eingerichtet ist, mit anderen IED-Geräten (4-8 ... 4-16) durch eine erste Schleife hindurch zu kommunizieren, die zwischen allen IED-Geräten in dem Automatisierungsdatenkommunikationsnetzwerk (4-50 ... 4-56) eingerichtet ist, und dadurch, dass das Gerät (4-8 ... 4-16) dafür eingerichtet ist, mit einem Steuerungs- und Datenerfassungsgerät (3-2, 4-2) durch eine zweite Schleife hindurch, die zwischen zwei oder mehr IED-Geräten und dem Steuerungs- und Datenerfassungsgerät (4-30, 4-52, 4-54, 4-35) eingerichtet ist, und eine dritte Schleife, die zwischen zwei oder mehr IED-Geräten und dem Steuerungs- und Datenerfassungsgerät eingerichtet ist, die sich von der zweiten Schleife (4-30, 4-50, 4-40, 4-56, 4-35) unterscheidet, zu kommunizieren.

11. System, umfassend ein Steuerungs- und Datenerfassungsgerät (4-2) für ein Automatisierungsdatenkommunikationsnetzwerk (3-1, 4-1), wobei das Gerät (4-2) dafür eingerichtet ist, ein Protokoll zum Steuern von Kommunikation innerhalb des Netzwerks (3-1, 4-1) zu unterstützen, und ein Element (4-6) mit mindestens zwei Anschlüssen, die in einer funktionalen Verbindung mit dem Gerät (4-2) eingerichtet sind, **dadurch gekennzeichnet, dass** das Gerät (4-2) dafür eingerichtet ist, mit allen IED-Geräten (4-8 ... 4-16), intelligenten Elektronikgeräten, die miteinander eine erste Schleife (4-40, 4-50 ... 4-56) in dem Automatisierungsdatenkommunikationsnetzwerk (3-1, 4-1) bildend verbunden sind, durch eine zweite Schleife (4-50 ... 4-56) hindurch, die zwischen zwei oder mehr IED-Geräten und dem Gerät eingerichtet ist, und eine sich von der zweiten Schleife unterscheidenden dritte Schleife, die zwischen zwei oder mehr IED-Geräten und dem Gerät (4-30, 4-52, 4-54, 4-35) eingerichtet ist, zu kommunizieren.

## Revendications

1. Réseau de communication de données d'automatisation (3-1, 4-1), comprenant
- un dispositif d'acquisition de données et de commande (3-2, 4-2), ledit dispositif supportant un protocole pour commander des communications à l'intérieur dudit réseau (3-1, 4-1) ;
- un ou plusieurs dispositifs IED (4-8 ... 4-16), Dispositifs Électroniques Intelligents, lesdits dispositifs IED supportant un protocole pour commander des communications à l'intérieur dudit réseau (3-1, 4-1) et comprenant un commutateur (4-8a) avec au moins deux ports agencé dans une connexion fonctionnelle avec les dispositifs IED,
**caractérisé en ce que**
- un élément (4-6) avec au moins deux ports est agencé dans une connexion fonctionnelle avec le dispositif d'acquisition de données et de commande (3-2, 4-2) ; et **en ce que**
- une première boucle (4-40, 4-50 ... 4-56) est agencée entre tous les dispositifs IED (4-8 ... 4-16), une deuxième boucle (4-30, 4-52, 4-54, 4-35) est agencée entre deux ou plusieurs dispositifs IED (4-10, 4-12, 4-14) et le dispositif d'acquisition de données et de commande (3-2, 4-2), et une troisième boucle différente de la deuxième boucle (4-30, 4-50, 4-40, 4-56, 4-35) est agencée entre deux ou plusieurs dispositifs IED (4-10, 4-8, 4-16, 4-14) et le dispositif d'acquisition de données et de commande (3-2, 4-2) et **en ce que**
- les dispositifs IED sont agencés pour communiquer avec les autres dispositifs IED par l'intermédiaire de la première boucle et les dispositifs IED et le dispositif d'acquisition de données et de commande sont agencés pour communiquer entre eux par l'intermédiaire de la deuxième et de la troisième boucle.

2. Réseau (3-1, 4-1) selon la revendication 1, **caractérisé en ce que** ledit élément (4-6) avec au moins deux ports est intégré dans le dispositif d'acquisition de données et de commande.

3. Réseau (3-1, 4-1) selon la revendication 1 ou 2, **caractérisé en ce que** ledit élément (4-6) avec au moins deux ports est remplacé par une carte Ethernet avec au moins deux ports.

4. Réseau (3-1, 4-1) selon l'une quelconque des revendications précédentes, **caractérisé en ce que** ledit commutateur (4-8a) avec au moins deux ports est intégré dans un IED.

5. Réseau (3-1, 4-1) selon l'une quelconque des revendications précédentes, **caractérisé en ce que** ledit commutateur (4-8a) avec au moins deux ports est remplacé par une carte Ethernet avec au moins deux ports.

6. Réseau (3-1, 4-1) selon l'une quelconque des revendications précédentes, **caractérisé en ce que** le protocole est agencé pour empêcher la création de boucles fonctionnellement non terminées.

7. Réseau (3-1, 4-1) selon la revendication 6, **caractérisé en ce que** le protocole est le Protocole de l'Arbre Maximal ou le Protocole de l'Arbre Maximal Rapide.

8. Réseau (3-1, 4-1) selon l'une quelconque des revendications précédentes, **caractérisé en ce qu'**il comprend en outre un ou plusieurs dispositifs IED (4-8 ... 4-16) adaptés directement au réseau en forme de boucle (3-1, 4-1) et/ou au dispositif d'acquisition de données et de commande (3-2, 4-2) en utilisant un commutateur.

9. Procédé pour établir un réseau de communication de données d'automatisation (3-1, 4-1) comprenant un ou plusieurs dispositifs IED, Dispositifs Électroniques Intelligents, chacun comprenant un commutateur avec au moins deux ports fonctionnellement relié au dispositif IED et un dispositif d'acquisition de données et de commande redondant, ledit procédé utilisant un protocole pour commander des communications à l'intérieur dudit réseau (3-1, 4-1), **caractérisé en ce qu'**une première boucle (4-40, 4-50 ... 4-56) est créée entre tous les dispositifs IED (4-8... 4-16) par l'intermédiaire de laquelle les dispositifs IED communiquent avec les autres dispositifs IED, un élément avec au moins deux ports étant agencé dans une connexion fonctionnelle avec le dispositif d'acquisition de données et de commande,
une deuxième boucle (4-30, 4-52, 4-54, 4-35) est créée entre deux ou plusieurs dispositifs IED (4-10, 4-12, 4-14) et le dispositif d'acquisition de données et de commande (3-2, 4-2), et une troisième boucle différente de la deuxième boucle (4-30, 4-50, 4-40, 4-56, 4-35) est créée entre deux ou plusieurs dispositifs IED (4-10, 4-8, 4-16, 4-14) et le dispositif d'acquisition de données et de commande (3-2, 4-2), dans lequel des communications entre le dispositif d'acquisition de données et de commande et les dispositifs IED sont effectuées par l'intermédiaire de la deuxième et de la troisième boucle.

10. Dispositif IED, Dispositif Électronique Intelligent, (4-8 ... 4-16) pour un réseau de communication de données d'automatisation (3-1, 4-1), ledit dispositif (4-8 ... 4-16) étant agencé pour supporter un protocole pour commander des communications à l'intérieur dudit réseau (3-1, 4-1) et comprenant un commutateur (4-8a) avec au moins deux ports agencé dans une connexion fonctionnelle avec ledit dispositif (4-8 ... 4-16), **caractérisé en ce que** le dispositif (4-8 ... 4-16) est agencé pour communiquer avec d'autres dispositifs IED (4-8 ... 4-16) par l'intermédiaire d'une première boucle agencée entre tous les dispositifs IED dans le réseau de communication de données d'automatisation (4-50 ... 4-56) et **en ce que** le dispositif (4-8 ... 4-16) est agencé pour communiquer avec un dispositif d'acquisition de données et de commande (3-2, 4-2) par l'intermédiaire d'une deuxième boucle agencée entre deux ou plusieurs dispositifs IED et le dispositif d'acquisition de données et de commande (4-30, 4-52, 4-54, 4-35) et d'une troisième boucle agencée entre deux ou plusieurs dispositifs IED et le dispositif d'acquisition de données et de commande différente de la deuxième boucle (4-30, 4-50, 4-40, 4-56, 4-35).

11. Système comprenant un dispositif d'acquisition de données et de commande (4-2) pour un réseau de communication de données d'automatisation (3-1, 4-1), ledit dispositif (4-2) étant agencé pour supporter un protocole pour commander des communications à l'intérieur dudit réseau (3-1, 4-1) et un élément (4-6) avec au moins deux ports étant agencé dans une connexion fonctionnelle avec ledit dispositif (4-2), **caractérisé en ce que** le dispositif (4-2) est agencé pour communiquer avec tous les dispositifs IED (4-8 ... 4-16), Dispositifs Électroniques Intelligents, qui sont interconnectés, formant une première boucle (4-40, 4-50 ... 4-56) dans le réseau de communication de données d'automatisation (3-1, 4-1) par l'intermédiaire d'une deuxième boucle (4-50 ... 4-56) agencée entre deux ou plusieurs dispositifs IED et le dispositif et d'une troisième boucle différente de la deuxième boucle agencée entre deux ou plusieurs dispositifs IED et le dispositif (4-30, 4-52, 4-54, 4-35).
